# EUROPEAN PATENT SPECIFICATION

(11) **EP 3 048 590 B1**
(45) Date of publication and mention of the grant of the patent: **15.08.2018**
(21) Application number: 15152558.1
(22) Date of filing: 26.01.2015
(51) Int. Cl.: G07F 13/10, G07F 13/06, A47J 31/44

(54) **DEVICE AND METHOD FOR FEEDING CUPS IN A MACHINE FOR PREPARING AND DISPENSING BEVERAGES**
VORRICHTUNG UND VERFAHREN ZUR ZUFÜHRUNG VON BECHERN IN EINE MASCHINE ZUR ZUBEREITUNG UND AUSGABE VON GETRÄNKEN
DISPOSITIF ET PROCÉDÉ DE DISTRIBUTION DE GOBELETS DANS UNE MACHINE POUR PRÉPARER ET DISTRIBUER DES BOISSONS

(43) Date of publication of application: 27.07.2016
(73) Proprietor: Rheavendors Services S.P.A., 22100 Como (IT)
(72) Inventor: Doglioni Majer, Carlo, I-22100 COMO (CO) (IT)
(74) Representative: Valentini, Giuliano

(56) References cited:
- EP-A1- 1 818 881
- EP-A1- 2 546 810
- WO-A1-2011/064650
- WO-A1-2013/041580

## Description

### Field Of The invention

The present invention relates to a device and a method for feeding cups to the withdrawal compartment of a machine for preparing and dispensing beverages and, in particular, to a device suitable for feeding cups having different size in a vending machine for hot and cold beverages.

In the beverage vending machines of the known type, a device for feeding cups is generally provided, which has essentially the function of receiving a cup from a store present in the dispensing machine to a withdrawal compartment. The cup, having generally a truncated-cone shape, is then in the position in which it can be filled with the beverage and, therefore, withdrawn by a user.

However, the cups fed to the withdrawal compartment can have different size, according to the beverage the user selected. However, during the filling step, the cup must always be placed properly with respect to the dispensing nozzles, independently from its size, in order to prevent unwanted spillages of dispensed fluids from the withdrawal compartment.

### Prior Art

The patent application WO2011/064650 discloses a unit for feeding cups which intends to solve the problem of the proper axial positioning of cups, independently from their size, in the withdrawal compartment of the vending machine. Inside the withdrawal compartment, the unit for feeding cups comprises a movable plane for the rest of a cup delivered from the top in a known way.

The feeding unit 1 further comprises a centering device allowing cups of different size to be properly positioned with respect to the dispensing nozzles. The centering device is essentially formed by a fixed annular body provided with a plurality of centering elements, which are hinged on respective axes and uniformly distributed along the annular body, so as to provide a yielding rest to the outer wall of a cup. The positioning procedure entails the movement of the rest plane downwards, so that the cup rests on the centering elements thereby aligning in a proper axial position with respect to the nozzles dispensing the beverages, and the subsequent movement of the plane upwards, until the desired height is reached in which the delivery happens. Once the delivery is completed, the movable plane comes back to its lower position to allow a user to withdraw the cup filled with the selected beverage.

However, the arrangement of the fixed annular body in the withdrawal compartment can hamper necessary cleaning interventions inside the compartment itself, thereby involving not only hygienic inconveniences, but also possible accumulated deposits on movable parts, in particular the centering elements, which can compromise the proper unit operation.

Moreover, this solution is evidently complex to be implemented and rather delicate, therefore potentially subjected to damages or malfunctions due, for example, to users' negligence, as well as to deposits and/or scales on the centering elements.

WO 2013/041580 discloses a dispensing device having a movable cup support which is adapted to hold cups of different sizes. The cup support comprises an outer support structure formed by a ring-shaped element and an inner support structure formed by a plurality of radial fin-shaped elements. The correct positioning of a cup on the support, which is manually performed by a customer, is linked to the shape of the cup bottom in combination with the shape of the fin elements of the cup support.

EP2546810 discloses a beverage vending machine with at least two cup-holders for being able to receive cups of different sizes.

EP1818881 discloses a cup conveyor and holder device that can receive cups of different sizes thanks to its funnel shape.

Object of the present invention is therefore to provide a device for feeding cups that allows facilitating the cleaning and maintenance interventions in the withdrawal compartment of a machine for preparing and dispensing beverages.

Another object of the present invention is to provide a device of the above mentioned type that has a simple and reliable construction.

A further object of the present invention is to provide a device of the above mentioned type that allows the simple and automatic adaptation to the proper positioning of cups having different size, thereby avoiding unwanted dispersions of beverages in the withdrawal compartment.

### Summary of the Invention

These objects are achieved according to the invention through a device for feeding cups according to claim 1. Further specific characteristics of the present invention are reported in the dependent claims.

The device for feeding cups is intended for being installed in a machine for preparing and dispensing beverages, in which there is a withdrawal compartment provided with a bottom wall and a side wall that has at least one front opening accessible from the outside. The device comprises a supporting element for the cup, slidingly engaged in an opening of the bottom wall of the withdrawal compartment and means for translationally moving the supporting element between an upper position, in which the cup coming from a store of the machine is received, and a lower position in which the cup can be withdrawn by a user.

The supporting element for the cup, in the device according to the present invention, comprises an inner cavity open at least at its top end. The inner cavity comprises a lower portion having a substantially cylindrical shape and at least one upper portion having a truncated-cone shape tapered downwards, for receiving a cup. The inner cavity has its own axis coincident with the axis of the opening of the bottom wall of the withdrawal compartment and parallel with the translation direction of the supporting element.

Therefore the device is constructed simply and does not comprise fixed parts encumbering the inside of the withdrawal compartment, thus facilitating the cleaning and maintenance interventions. More in particular, there are no fixed or movable projections on the inner surface of the portion having a truncated-cone shape. Therefore, possible automated cleaning steps of the withdrawal compartment, carried out by the machine itself, can also be made effectively without causing drips or deposits as happens, on the contrary, in known devices on fixed or movable parts protruding from the withdrawal compartment.

The inner cavity of the supporting element is slidingly engaged in a fixed bearing plane for the cup and, when the supporting element is in the lower position, the upper edge of the portion of the inner cavity having a truncated-cone shape, is aligned with the upper surface of the fixed bearing plane and with the upper surface of the bottom wall of the withdrawal compartment.

To facilitate the proper alignment of the cup during the dispensing step, the upper portion of truncated-cone shape of the supporting element has a major diameter smaller than the major diameter of the greatest cup fed in the machine, and a minor diameter greater than the major diameter of the smallest cup fed in the machine. As the smallest cups are dispensed, possible dispersions or dips of beverages outside of the cup will deposit on the inner wall of the truncated-cone shaped portion of the supporting element. Anyway, the latter goes down until its upper edge has become flush with the bottom wall of the withdrawal compartment, in order to facilitate the withdrawal of the filled cup by a user; furthermore in this position, a possible automated cleaning can be facilitated after the cup with the beverage has been withdrawn by a user.

The inner cavity of the supporting element includes, at its bottom end, a closing wall crossed by at least one duct protruding outwardly so that the inner cavity fluidically communicates with the outer space. The residues of beverage or cleaning fluids are therefore evacuated before a successive delivery.

In a possible embodiment, the fixed bearing plane for the cup is constrained to the opening edge of the bottom wall of the withdrawal compartment by means of one or more radial arms. The supporting element in its turn comprises one or more corresponding slits slidingly engaged on the radial arms.

The means for translationally moving the supporting element include at least one bracket removably constrained to the supporting element. Therefore the latter can be removed easily from the machine for possible and more accurate cleaning and/or sanitizing operations, or else also for its substitution with another corresponding supporting element suitable for sizes of cups different from those initially provided for the machine, on the contrary leaving unchanged the remaining part of the movement means of the supporting element.

The bracket can comprise, for example, at least one flat portion with a toothed surface, so that a rack can be formed and coupled with a pinion rotated by an electric motor.

The invention also relates to a method for feeding cups to the withdrawal compartment of a machine for preparing and dispensing beverages, wherein the withdrawal compartment is provided with at least one bottom wall adapted to receive the cup and a side wall having a front opening accessible from the outside.

The method comprises the steps of:
a) providing a supporting element of the cup, which is slidingly engaged in an opening of the bottom wall of the withdrawal compartment;
b) translating the supporting element upwards up to at least one upper position in which the cup, coming from a store of the machine, is received;
c) translating the supporting element downwards up to a lower position, in which the cup can be withdrawn by a user.

In step a), the cup is received by the supporting element in an inner cavity open at least at its top end, comprising a lower portion having a substantially cylindrical shape and at least one upper portion having a truncated-cone shape tapered downwards for centering the cup independently from its size. The inner cavity has an axis coincident with the axis of the opening of the bottom wall of the withdrawal compartment and parallel with the translation direction of the supporting element.

The inner cavity of the supporting element is slidingly engaged with a fixed bearing plane for the cup. At the end of step c), the upper edge of the portion of the inner cavity having a truncated-cone shape, is always aligned with the upper surface of the bearing plane and with the upper surface of the bottom wall of the withdrawal compartment. The withdrawal compartment is therefore free from any projections in its inside. The suggested solution of the present invention lends itself to allow the dispensing of the beverage when the supporting element is in the upper position, i.e. with the upper edge of the cup very close to the dispensing spouts of the beverages, thereby avoiding possible dispersions of beverages in the withdrawal compartment.

### Brief Description of the Drawings

Further characteristics and advantages of the present invention will be more evident in the following description, for illustrative and not limitative purposes, referring to the attached drawings, wherein:
- Figure 1 is a front view illustrating the withdrawal compartment of a vending machine provided with a device according to a possible embodiment of the invention;
- Figure 2 is a sectional perspective view of the withdrawal compartment of Figure 1;
- Figure 3 is a perspective elevation view of a supporting element constrained to a movement bracket;
- Figure 4 is an elevation perspective view only of the supporting element of Figure 3;
- Figure 5 is a perspective view of a supporting plane for the cup, coupled with the supporting element;
- Figure 6 is a front view of the withdrawal compartment of Figure 1 with the supporting element in the upper position adopted with the greatest cup; and
- Figure 7 is a front view of the withdrawal compartment of Figure 1 with the supporting element in the upper position adopted with the smallest cup.

### Modes for Carrying out the Invention

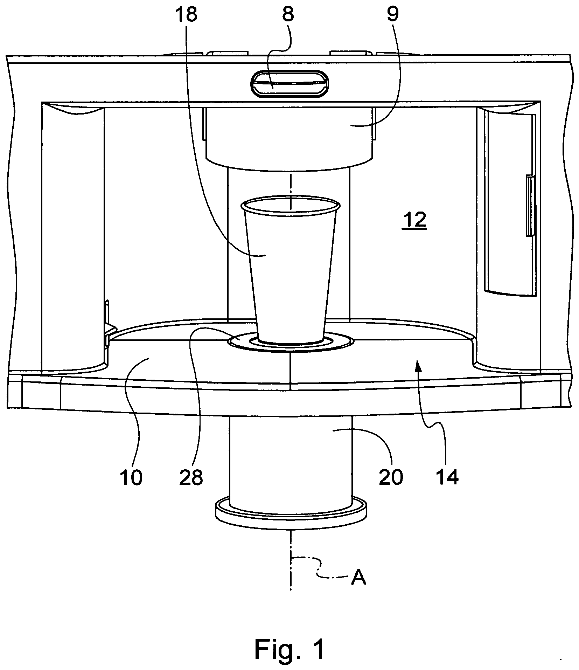

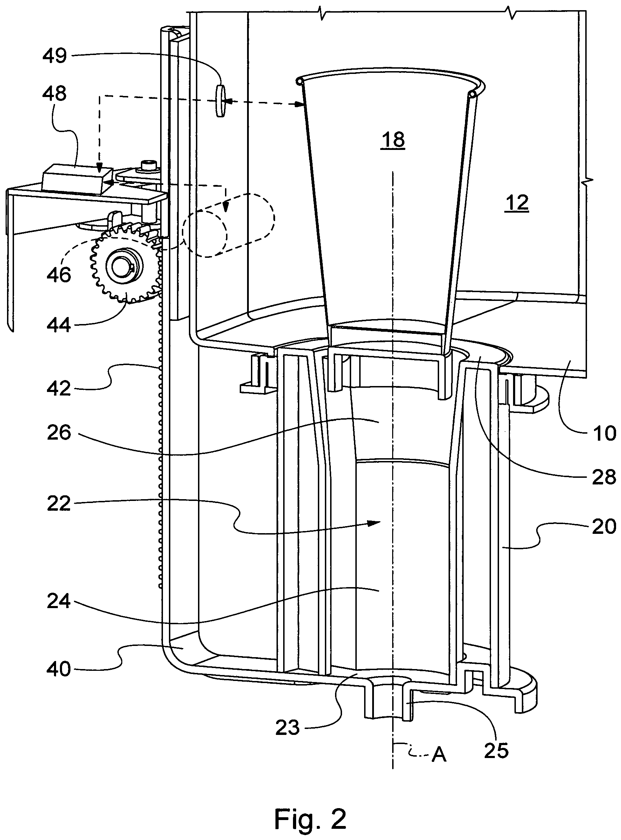

In Figures 1 and 2 a withdrawal compartment is represented of a machine for preparing and dispensing beverages, or more simply, of a beverage vending machine, in which the withdrawal compartment 14 essentially comprises a bottom wall 10 and a side wall 12 that has a front opening accessible from the outside, to allow a user to withdraw a cup 18. The front opening can also be closed by an openable and reclosable door (not shown) to avoid possible squirts of fluids during the delivery.

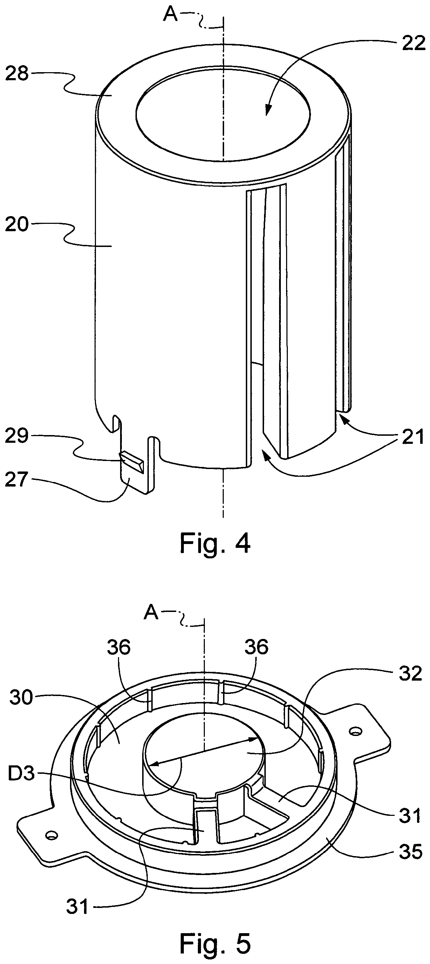

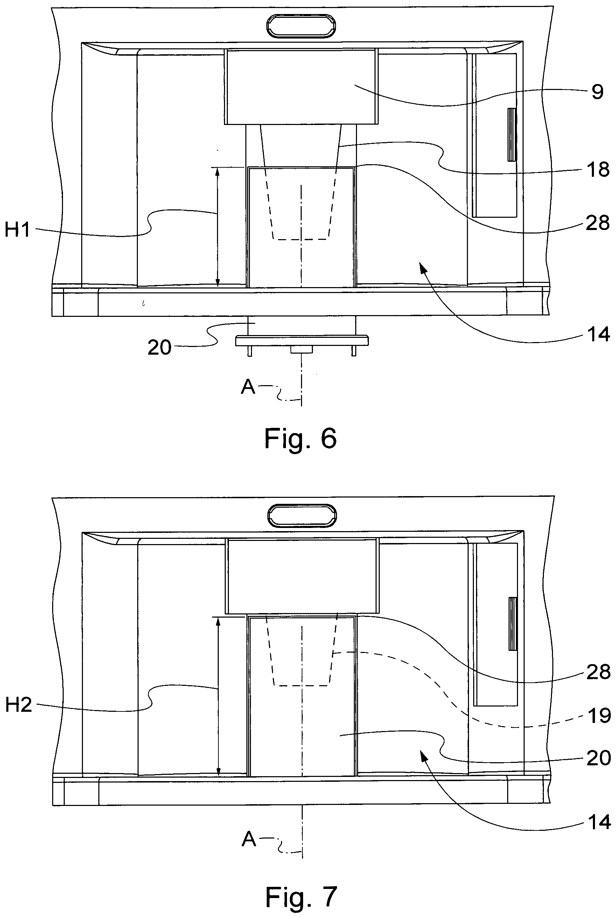

According to a possible embodiment, a device of the present invention comprises a supporting element 20 for the cup, which is slidingly engaged with a supporting opening 30 (better visible in Figure 5) and can be translationally moved between an upper position (Figures 6 and 7), in which the cup coming from a store of the vending machine is received, and a lower position (Figures 1 and 2) in which the cup can be withdrawn by a user. A photocell 8 is preferably present for detecting the presence of a user next to the machine.

As can be seen in Figure 2, the supporting element 20 has an inner cavity 22 open at its top end and comprising a lower portion 24 having a substantially cylindrical shape, and an upper portion 26 having a truncated-cone shape tapered downwards, to receive a cup 18. The inner cavity has an axis A coincident with the axis of the opening 30 of the bottom wall of the withdrawal compartment and parallel with the translation direction of the supporting element 20.

At the bottom end of the cavity 22 and, in particular, of the portion 24 having a substantially cylindrical shape, a closing wall 23 is provided and crossed by a duct 25 protruding outwardly so that the inner cavity 22 fluidically communicates with the outer space. The duct 25 allows the evacuation of possible fluids penetrating into the inner cavity 22, for example cleaning fluids or residues of dispensed beverages, and the draining of the same fluids towards a tank of the vending machine or a possible draining system.

The supporting element 20 is removably constrained to a bracket 40 and is integrally movable therewith. For example, the movement of the supporting element 20 can be carried out by a rack 42 arranged on the bracket 40 or obtained as a single piece therewith, and coupled with a pinion 44 rotated by an electric motor 46 preferably combined with an encoder conveniently driven by a controller 48, in order to drive the ascent or the descent of the supporting element 20 during the steps of receiving a cup, dispensing the beverage and descending the cup to the height of the bottom wall 10 of the withdrawal compartment 14.

In a preferred embodiment, inside the withdrawal compartment 14 there is a photocell 49 allowing to detect possible obstacles during the ascent of the supporting element 20 towards the position in which the cup is received. The photocell is preferably arranged in the upper part of the compartment, under the device for dispensing the beverage, in order to detect whether a body is present in the compartment or not. The information provided by the photocell 49, together with the information detected by the encoder combined with the electric motor 46, allow the controller 48 to determine the presence of possible obstacles, for example a cup left before, the user's hand or other objects left in the withdrawal compartment 14, and consequently to stop the ascent of the supporting element 20 and, in case, to return it to its lower position. In other words, if the photocell detects the presence of a body, the controller checks what is the position of the cylinder or supporting element: such a check is carried out on the basis of the information provided by the encoder. If information confirm the motor moved the support 20 to the photocell height, it follows that the detected body is the supporting element. If the information received from the encoder correspond to an height of the support 20 different from that one of the photocell, then consequently the body detected by the photocell is not that one of the supporting element 20; in this case, the controller 48 stops the ascent of the supporting element 20.

In any case, the cup expected on the basis of the selection the user made is fed only when the supporting element 20 has reached the predetermined upper position by encountering no obstacles, given on the basis of the matched information of the encoder combined with the motor 46, and the photocell 49.

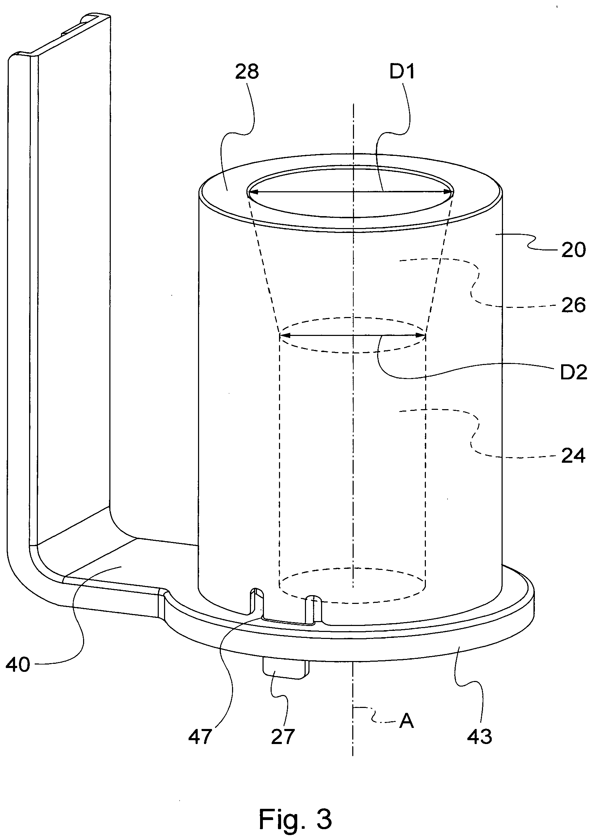

As an alternative (or in addition) to the above described photocell, the motor of the device according to the invention can be provided with a safety clutch to stop the ascent of the support 20, for example in case of presence of a hand or body different from the support 20 between the fixed element 9 accommodating or protecting the dispensing means, and the movable element supporting the cup 18. In Figure 3 the cylindrical or substantially cylindrical outer geometry of the supporting element 20 and the geometry of the inner cavity 22 are highlighted, with the supporting element 20 in a condition constrained by the bracket 40. The portion of upper cavity 26 with a truncated-cone shape has an inner major diameter D1 smaller than the outer major diameter of the greatest cup 18 (Figures 1 and 6) provided for the use in the vending machine. On the contrary, the inner minor diameter D2 is greater than the outer major diameter of the smallest cup 19 (Figure 7) provided for the use in the vending machine. The inner minor diameter D2 of the portion of the upper cavity 26 coincides with the inner diameter of the portion of the lower cavity 24 having a substantially cylindrical shape. The supporting element 20 is removably constrained to the bracket 40 and is integrally movable therewith. In fact, as represented also in Figure 4, the supporting element 20 is provided with elastically deformable fins 27, on which there is a protruding tooth 29. The fins 27 are inserted in corresponding windows 47 of the base portion 43 of the bracket 40, thereby obtaining the constraint for snap fitting the supporting element 20 to the bracket 40.

In the view of Figure 4 also two slits 21 are represented and extend for almost the whole height of the supporting element 20. The slits 21 are slidingly engaged on radial arms 31 visible in Figure 5, which connect a fixed bearing plane 32 for the cup to the edge of the opening 30 in which the supporting element 20 slides. The opening 30 is obtained in an insert 35 fixed to the bottom wall 10 of the withdrawal compartment. Moreover there are vertical ribs 36 on the wall surrounding the opening 30, which limit the friction as the supporting element 20 slides through the opening 30. The fixed bearing plane 32, coaxial with the supporting element 20, has a circular shape and a diameter D3 smaller than the inner minor diameter D2 of the inner cavity 22. It follows that the inner cavity 22 of the supporting element 22 is slidingly engaged with the fixed bearing plane 32.

When a cup 18 (or 19) is in the withdrawal position (Figures 1 and 2), the supporting element 20 is in its lower position, i.e. a position in which the upper edge 28 of the supporting element 20 is aligned with the upper surface of the fixed bearing plane 32 and with the upper surface of the bottom wall 10 of the withdrawal compartment 14. In Figures 6 and 7 the positions adopted by the supporting element 20, when the cups of two different sizes have been received, and the subsequent delivery of a beverage, are represented by way of example.

Before the user's selection of any one beverage from the vending machine, the supporting element 20 is in its lower position represented in Figures 1 and 2, with no cup in the withdrawal compartment 14. In other words, the upper edge 28 of the supporting element 20 is aligned with the upper surfaces of the fixed bearing plane 32 and of the bottom wall 10.

As the selection is made, the supporting element 20 is translated upwards to receive a cup 18 (or 19) of the size expected for the selected beverage, until it reaches its upper position. In case of the greatest cup 18, represented in Figure 6, the upper edge 28 of the supporting element 20 reaches a height H1 corresponding to the height in which the edge of the cup 18 is at the proper dispensing height with respect to the nozzles (herein not shown). The "proper height" of delivery corresponds to a height in which the jet of dispensed beverage is preferably directed against the side wall of the cup, so that the unwanted formation of bubbles is reduced and, consequently, the aspect and quality of the dispensed beverage are improved. The dispensing devices are not shown and are preferably arranged inside or above the element 9. At the end of the delivery, the supporting element 20 is lowered and returned to its lower position represented in Figures 1 and 2, i.e. in that one in which the cup 18 can be withdrawn by the user who made the selection.

In case of a cup 19 having the smallest size provided for the use in the vending machine, the initial condition is the same. After the user made the selection, the supporting element 20 is translated upwards until it reaches its upper position for receiving the cup 19. In this case, as represented in Figure 7, the upper edge 28 of the supporting element 20 reaches a height H2 corresponding, for all practical purposes, to the proper delivering height having the above stated meaning. At the end of the delivery, the supporting element 20 is lowered and returned to its lower position represented in Figures 1 and 2, in which the cup 19 can be withdrawn by the user who made the selection.

In every case, the "proper height" of delivery is preferably variable and can be adjusted not only depending on different cup sizes, but also depending on the type of beverage to be dispensed in order to limit the bubble formation as much as possible.

The presence of the upper cavity 26 having a truncated-cone shape anyway guarantees the proper axial alignment of a cup 18 or 19, independently from the size thereof, when the latter is returned to the proper delivery height H.

Various modifications can be made to the herein depicted embodiments without departing from the scope of the present invention. For example, the movement of the supporting element 20 can also be obtained by a kinematic coupling between a worm and a nut screw, rather than by the kinematic coupling between the pinion and the rack, as hereinabove described.

## Claims

1. A device for feeding cups to the withdrawal compartment (14) of a machine for preparing and dispensing beverages, wherein the withdrawal compartment (14) is provided with a bottom wall (10) and a side wall (12) that has at least one front opening accessible from the outside, and wherein the device comprises a supporting element (20) for the cup (18, 19), and means for translationally moving said supporting element (20) between an upper position, in which the cup (18, 19) coming from a store of said machine is received, and a lower position in which the cup (18, 19) can be withdrawn by a user, **characterized in that** said supporting element (20) for the cup is slidingly engaged in an opening (30) of the bottom wall (10) of said withdrawal compartment (14) and comprises an inner cavity (22) open at least at its top end, wherein said inner cavity (22) comprises a lower portion (24) having a substantially cylindrical shape and at least one upper portion (26) having a truncated-cone shape tapered downwards for receiving and centering the cup (18, 19), said inner cavity (22) having an axis (A) coincident with the axis of the opening (30) of the bottom wall (10) of the withdrawal compartment (14) and parallel with the translation direction of the supporting element (20), wherein the inner cavity (22) of the supporting element (20) is slidingly engaged in a fixed bearing plane (32) for the cup (18, 19) and wherein, when the supporting element (20) is in said lower position, the upper edge (28) of said portion (26) of the inner cavity having a truncated-cone shape, is aligned with the upper surface of said bearing plane (32) and with the upper surface of the bottom wall (10) of the withdrawal compartment (14).

2. The device according to claim 1, wherein the inner cavity (22) of said supporting element (20) includes, at its bottom end, a closing wall (23) crossed by at least one duct (25) protruding outwardly to put the inner cavity (22) in fluid communication with the outer space.

3. The device according to any one of the preceding claims, wherein said fixed bearing plane (32) for the cup is constrained to the edge of said opening (30) of the bottom wall (10) of the withdrawal compartment (14) by means of one or more radial arms (31), and wherein said supporting element (20) comprises one or more corresponding slits (21) slidingly engaged on said one or more radial arms (31).

4. The device according to claim 1, wherein said supporting element (20) is removably constrained to at least one bracket (40) and is integrally movable therewith.

5. The device according to claim 4, wherein said means for translationally moving said supporting element (20) include a rack (42) arranged on said bracket (40) and a pinion (44) coupled with the rack (42) and rotated by an electric motor (46).

6. A method for feeding cups to the withdrawal compartment (14) of a machine for preparing and dispensing beverages, wherein the withdrawal compartment (14) is provided with at least one bottom wall (10) adapted to receive the cup (18, 19) and a side wall (12) having a front opening accessible from the outside, the method comprising the steps of:
a) providing a supporting element (20) of the cup;
b) translating said supporting element (20) upwards up to at least one upper position in which the cup (18, 19), coming from a store of said machine, is received;
c) translating said supporting element (20) downwards up to a lower position, in which the cup (18, 19) can be withdrawn by a user,
**characterized in that** the supporting element (20) is slidingly engaged in an opening (30) of the bottom wall (10) of said withdrawal compartment (14), and **in that** the cup (18, 19), in said step a), is received by the supporting element (20) in an inner cavity (22) open at least at its top end, wherein said inner cavity (22) comprises a lower portion (24) having a substantially cylindrical shape and at least one upper portion (26) having a truncated-cone shape tapered downwards for receiving and centering the cup (18, 19), and wherein said inner cavity (22) has an axis (A) coincident with the axis of the opening (30) of the bottom wall (10) of the withdrawal compartment (14) and parallel with the translation direction of the supporting element (20), wherein the inner cavity (22) of the supporting element (20) is slidingly engaged in a fixed bearing plane (32) for the cup and wherein, at the end of said step c), the upper edge (28) of said lower portion (24) of the inner cavity having a truncated-cone shape, is aligned with the upper surface of said bearing plane (32) and with the upper surface of the bottom wall (10) of the withdrawal compartment (14).

7. The method according to claim 6, wherein the inner cavity (22) of said supporting element (20) includes, at its bottom end, a closing wall (23) crossed by at least one duct (25), and wherein the fluids entering the inner cavity (22) of said supporting element (20) are evacuated through said duct (25) that fluidically communicates the inner cavity (22) with the outer space.

8. A beverage vending machine, **characterized by** comprising a device for feeding cups (18, 19) according to any one of claims 1 to 5 or a device for feeding cups that operates according to a method of claim 6 or 7.

## Patentansprüche

1. Vorrichtung zum Zuführen von Bechern in das Entnahmefach (14) eines Geräts zum Zubereiten und Abgeben von Getränken, wobei das Entnahmefach (14) mit einer Bodenwand (10) und einer Seitenwand (12) ausgebildet ist, welche mindestens eine von außen zugängliche, vordere Öffnung aufweist, und wobei die Vorrichtung ein Halteelement (20) für den Becher (18, 19) umfasst und Mittel zum translatorischen Bewegen des Halteelements (20) zwischen einer oberen Position, in welcher der aus einem Speicher des Geräts kommende Becher (18 19) aufgenommen wird, und einer unteren Position, in welcher der Becher (18, 19) von einem Benutzer entnommen werden kann,
**dadurch gekennzeichnet, dass** das Halteelement (20) für den Becher mit einer Öffnung (30) der Bodenwand (10) des Entnahmefachs (14) gleitend in Eingriff steht und einen zumindest an seinem oberen Ende offenen Innenhohlraum (22) aufweist, wobei der Innenhohlraum (22) einen unteren Abschnitt (24) mit im wesentlichen zylindrischer Form umfasst und wenigstens einen oberen Abschnitt (26) mit einer sich nach unten verjüngenden, kegelstumpfförmigen Form zur Aufnahme und Zentrierung des Bechers (18, 19), wobei der Innenhohlraum (22) eine mit der Achse der Öffnung (30) der Bodenwand (10) des Entnahmefachs (14) übereinstimmende und zur Translationsrichtung des Halteelements (20) parallele Achse (A) aufweist, wobei der Innenhohlraum (22) des Halteelements (20) mit einer festen Auflage (32) für den Becher (18, 19) gleitend im Eingriff steht, und wobei der obere Rand (28) des eine kegelstumpfförmige Form aufweisenden Abschnitts (26) des Innenhohlraums mit der Oberfläche der Auflage (32) und mit der Oberfläche der Bodenwand (10) des Entnahmefachs (14) ausgerichtet ist, wenn sich das Halteelement (20) in der unteren Position befindet.

2. Vorrichtung gemäß Anspruch 1, wobei der Innenhohlraum (22) des Halteelements (20) an seinem unteren Ende eine Verschlusswand (23) aufweist, welche von wenigstens einem nach außen ragenden Gang (25) zur Fluidverbindung des Innenhohlraums (22) mit dem Außenraum durchquert ist.

3. Vorrichtung gemäß einem der vorhergehenden Ansprüche, wobei die feste Auflage (32) für den Becher mittels eines oder mehrerer radialer Arme (31) zum Rand der Öffnung (30) der Bodenwand (10) des Entnahmefachs (14) hin begrenzt ist, und wobei das Halteelement (20) einen oder mehrere entsprechende Schlitze (21) umfasst, die gleitend in den einen oder die mehreren radialen Arme (31) eingreifen.

4. Vorrichtung gemäß einem der Ansprüche 1, **dadurch gekennzeichnet, dass** das Halteelement (20) abnehmbar mit wenigstens einer Halterung (40) verbunden und mit dieser integral bewegbar ist.

5. Vorrichtung gemäß Anspruch 4, wobei die Mittel zum translatorischen Bewegen des Halteelements (20) eine an der Halterung (40) angeordnete Zahnstange (42) und ein Zahnrad (44) einschließen, welches mit der Zahnstange (42) verbunden ist und durch einen Elektromotor (46) gedreht wird.

6. Verfahren zum Zuführen von Bechern zum Entnahmefach (14) eines Geräts zum Zubereiten und Abgeben von Getränken, wobei das Entnahmefach (14) mit wenigstens einer zur Aufnahme des Bechers (18, 19) eingerichteten Bodenwand (10) und einer Seitenwand (12) mit einer von außen zugänglichen, vorderen Öffnung ausgebildet ist,
wobei das Verfahren die Schritte umfasst:
a) Bereitstellen eines Halteelements (20) für den Becher;
b) Verschieben des Halteelements (20) nach oben in wenigstens eine obere Position, in welcher der aus einem Speicher des Geräts kommende Becher (18, 19) aufgenommen wird;
c) Verschieben des Halteelements (20) nach unten in eine untere Position, in welcher der Becher (18, 19) von einem Benutzer entnommen werden kann,
**dadurch gekennzeichnet, dass**
das Halteelement (20) mit einer Öffnung (30) der Bodenwand (10) des Entnahmefachs (14) gleitend in Eingriff steht, und dass der Becher (18, 19) im Schritt a) in einen zumindest an seinem oberen Ende offenen Innenhohlraum (22) des Halteelements (20) aufgenommen wird, wobei der Innenhohlraum (22) einen unteren Abschnitt (24) mit im wesentlichen zylindrischer Form umfasst und wenigstens einen oberen Abschnitt (26) mit einer sich nach unten verjüngenden, kegelstumpfförmigen Form zur Aufnahme und Zentrierung des Bechers (18, 19), und wobei der Innenhohlraum (22) eine mit der Achse der Öffnung (30) der Bodenwand (10) des Entnahmefachs (14) übereinstimmende und zur Translationsrichtung des Halteelements (20) parallele Achse (A) aufweist, wobei der Innenhohlraum (22) des Halteelements (20) mit einer festen Auflage (32) für den Becher gleitend im Eingriff steht, und wobei am Ende von Schritt c) der obere Rand (28) des eine kegelstumpfförmige Form aufweisenden, unteren Abschnitts (24) des Innenhohlraums mit der Oberfläche der Auflage (32) und mit der Oberfläche der Bodenwand (10) des Entnahmefachs (14) ausgerichtet ist.

7. Verfahren gemäß Anspruch 6, wobei der Innenhohlraum (22) des Halteelements (20) an seinem unteren Ende eine von wenigstens einem Gang (25) durchquerte Verschlusswand (23) aufweist, und wobei die in den Innenhohlraum (22) des Halteelements (20) eintretenden Flüssigkeiten durch den Gang (25) zur Fluidverbindung des Innenhohlraums (22) mit dem Außenraum abgeleitet werden.

8. Getränkeautomat, **dadurch gekennzeichnet, dass** er eine Vorrichtung zum Zuführen von Bechern (18, 19) gemäß einem der Ansprüche 1 bis 5 oder eine entsprechend eines Verfahrens gemäß Anspruch 6 oder 7 arbeitende Vorrichtung zum Zuführen von Bechern umfasst.

## Revendications

1. Dispositif pour alimenter en gobelets le compartiment de retrait (14) d'une machine de préparation et de distribution de boissons, dans lequel le compartiment de retrait (14) est doté d'une paroi inférieure (10) et d'une paroi latérale (12) qui a au moins une ouverture avant accessible depuis l'extérieur, et dans lequel le dispositif comprend un élément de support (20) pour le gobelet (18, 19), et un moyen de déplacement en translation dudit élément de support (20) entre une position supérieure, dans laquelle le gobelet (18, 19) provenant d'une réserve de ladite machine est reçu, et une position inférieure dans laquelle le gobelet (18, 19) peut être retiré par un utilisateur, **caractérisé en ce que** ledit élément de support (20) pour le gobelet est en prise coulissante dans une ouverture (30) de la paroi inférieure (10) dudit compartiment de retrait (14) et comprend une cavité intérieure (22) ouverte au moins au niveau de son extrémité supérieure, dans laquelle ladite cavité intérieure (22) comprend une partie inférieure (24) ayant une forme sensiblement cylindrique et au moins une partie supérieure (26) ayant une forme tronconique effilée vers le bas pour recevoir et centrer le gobelet (18, 19), ladite cavité intérieure (22) ayant un axe (A) coïncident avec l'axe de l'ouverture (30) de la paroi inférieure (10) du compartiment de retrait (14) et parallèle à la direction de translation de l'élément de support (20), dans lequel la cavité intérieure (22) de l'élément de support (20) est en prise coulissante dans un plan de support fixe (32) pour le gobelet (18, 19) et dans lequel, lorsque l'élément de support (20) se trouve dans ladite position inférieure, le bord supérieur (28) de ladite partie (26) de la cavité intérieure ayant une forme tronconique, est aligné avec la surface supérieure dudit plan de support (32) et avec la surface supérieure de la paroi inférieure (10) du compartiment de retrait (14).

2. Dispositif selon la revendication 1, dans lequel la cavité intérieure (22) dudit élément de support (20) comprend, au niveau de son extrémité inférieure, une paroi de fermeture (23) traversée par au moins un conduit (25) faisant saillie vers l'extérieur pour mettre la cavité intérieure (22) en communication fluidique avec l'espace extérieur.

3. Dispositif selon l'une quelconque des revendications précédentes, dans lequel ledit plan de support (32) pour le gobelet est contraint au bord de ladite ouverture (30) de la paroi inférieure (10) du compartiment de retrait (14) au moyen d'un bras radial (31) ou plus, et dans lequel ledit élément de support (20) comprend une fente correspondante (21) ou plus en prise coulissante avec ledit un bras radial (31) ou plus.

4. Dispositif selon la revendication 1, dans lequel ledit élément de support (20) est contraint de façon amovible à au moins un crochet (40) et est mobile d'un seul tenant avec celui-ci.

5. Dispositif selon la revendication 4, dans lequel ledit moyen de déplacement en translation dudit élément de support (20) comprend une crémaillère (42) disposée sur ledit crochet (40) et un pignon (44) couplé à ladite crémaillère (42) et entraîné en rotation par un moteur électrique (46).

6. Procédé pour alimenter en gobelets le compartiment de retrait (14) d'une machine de préparation et de distribution de boissons, dans lequel le compartiment de retrait (14) est doté d'au moins une paroi inférieure (10) adaptée à recevoir le gobelet (18, 19) et une paroi latérale (12) ayant une ouverture avant accessible depuis l'extérieur, le procédé comprenant les étapes de :
a) fourniture d'un élément de support (20) du gobelet ;
b) translation dudit élément de support (20) vers le haut jusqu'à au moins une position supérieure dans laquelle le gobelet (18, 19), provenant d'une réserve de ladite machine, est reçu ;
c) translation dudit élément de support (20) vers le bas jusqu'à une position inférieure, dans laquelle le gobelet (18, 19) peut être retiré par un utilisateur,
**caractérisé en ce que** l'élément de support (20) est en prise coulissante dans une ouverture (30) de la paroi inférieure (10) dudit compartiment de retrait (14), et **en ce que** le gobelet (18, 19), dans ladite étape a), est reçu par l'élément de support (20) dans une cavité intérieure (22) ouverte au moins au niveau de son extrémité supérieure, dans lequel ladite cavité intérieure (22) comprend une partie inférieure (24) ayant une forme sensiblement cylindrique et au moins une partie supérieure (26) ayant une forme tronconique effilée vers le bas pour recevoir et centrer le gobelet (18, 19), et dans lequel ladite cavité intérieure (22) a un axe (A) coïncident avec l'axe de l'ouverture (30) de la paroi inférieure (10) du compartiment de retrait (14) et parallèle à la direction de translation de l'élément de support (20), dans lequel ladite cavité intérieure (22) de l'élément de support (20) est en prise coulissante dans un plan de support fixe (32) pour le gobelet et dans lequel, à la fin de ladite étape c), le bord supérieur (28) de ladite partie inférieure (24) de la cavité intérieure ayant une forme tronconique, est aligné avec la surface supérieure dudit plan de support (32) et avec la surface supérieure de la paroi inférieure (10) du compartiment de retrait (14).

7. Procédé selon la revendication 6, dans lequel la cavité intérieure (22) dudit élément de support (20) comprend, au niveau de son extrémité inférieure, une paroi de fermeture (23) traversée par au moins un conduit (25), et dans lequel les fluides entrant dans la cavité intérieure (22) dudit élément de support (20) sont évacués par ledit conduit (25) qui met en communication fluidique la cavité intérieure (22) avec l'espace extérieur.

8. Distributeur automatique de boissons, **caractérisé en ce qu'**il comprend un dispositif d'alimentation en gobelets (18, 19) selon l'une quelconque des revendications 1 à 5 ou un dispositif d'alimentation en gobelets qui fonctionne selon la revendication 6 ou 7.
